# EUROPEAN PATENT SPECIFICATION

(11) **EP 3 231 656 B1**
(45) Date of publication and mention of the grant of the patent: **22.07.2020**
(21) Application number: 17166674.6
(22) Date of filing: 13.04.2017
(51) Int. Cl.: B60L 5/00, B60L 3/04, B60L 9/00, H04B 3/54, B60L 3/00

(54) **CHARGING SYSTEM FOR URBAN BUS**
LADESYSTEM FÜR STADTBUS
SYSTÈME DE CHARGE POUR BUS URBAIN

(30) Priority: 13.04.2016 IT UA20162563
(43) Date of publication of application: 18.10.2017
(73) Proprietor: IVECO FRANCE S.A.S., 69200 Vénissieux (FR)
(72) Inventor: GENDRE, Guy, 69003 LYON (FR); CODRON, Stephane, 69008 LYON (FR)
(74) Representative: Bongiovanni, Simone

(56) References cited:
- EP-A1- 1 533 913
- WO-A1-2011/149677
- US-A1- 2004 036 478
- US-A1- 2013 201 009
- US-A1- 2015 280 466

## Description

The invention relates to the charging of an electric bus starting from a charger (rectifier) located outside the vehicle.

According to the law on the charging of electric vehicles with a separate charger (standard socket), there must be an exchange of information between the charger and the battery before and during the charging. This connection is currently wired and called «pilot line», often a multicore cable with a grounding connection.

The pilot connection is used to ensure the safety of the charging. First of all, through the recognition of the battery and the implementation of the charging protocol, but also as emergency stop line.

The invention relates to a charging system for electric vehicles wherein the physical pilot connection is eliminated. The safety of the system and the exchange of data are obtained by using the electrical lines where a charging current circulates. In order to do so, an electrical architecture is needed to integrate the connection by means of a carrier current.

According to an aspect of the invention, there is provided a charging system for a urban bus as set forth in claim 1.

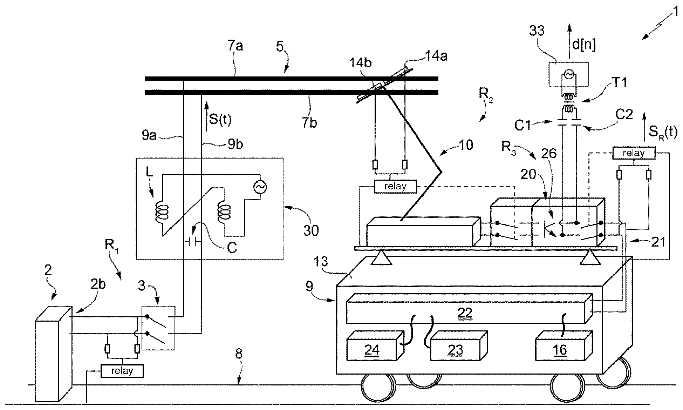

The invention will be best understood upon perusal of some embodiments described herein by mere way of non-limiting examples and through the accompanying drawing, which schematically shows a charging system for a urban bus according to the invention.

**The figure shows** a charging system 1 for a urban bus according to the invention.

The system 1 comprises a source 2 of charging voltage and a first contactor 3 which is arranged between an output 2b of the source 2 and an overhead power supply line 5 comprising two cables 7a and 7b which receive a positive/negative (or alternating) power supply by way of isolated power conductors 9a, 9b.

The contactor 3 is designed to establish or interrupt the passage of current starting from an electrical command, namely the contact 3 protects the system from the voltage source 2 up to the overhead conductors 9a, 9b. According to the example of the invention, the contactor 3 is associated with a first protection system R1 (contactor or digital relay), which permanently monitors the isolation of the charging source 2 with respect to the grounding 8. The exceeding of an unbalance threshold of <10mA (namely below 50V a resistance of 5kohm) causes the detection of the digital relay R1 and the opening of the first output contactor 3. By way of example, the digital relay can perform a differential control complying with standard IEC61851-23.

The system 1 comprises an electric vehicle 9 consisting of a urban bus, which is provided with a bipolar pantograph 10, which is fitted on the roof 13 of the vehicle 9 and can be adjusted between two positions when the vehicle 9 is arranged in a collection area: a contact position (lifted position shown in the figure), in which the shoes 14a and 14b of the pantograph 10 touch the respective cables 7a, 7b so as to provide a charging current to the batteries 16 of the vehicle 9, and an open position (lowered position, which is not shown in the figure, rest or safety position), in which the shoes 14a and 14b of the pantograph do not touch the cables 7a, 7b. The lifting movement of the pantograph 10 is obtained, for example, by means of pneumatic or electrical command.

A second protection system R2 permanently monitors the isolation between the shoes 14a and 14b of the pantograph 10 and the frame of the pantograph 10. The second protection system **R2** obtains the immediate decoupling between the shoes 14a, 14b of the pantograph 10 and the cables 7a, 7b when a current leakage is detected. The protection system R2 has a minimum sensitivity. Therefore, the protection system R2 lowers the pantograph 10 so as to obtain a disconnection between the shoes 14a and 14b of the pantograph 10 and the cables 7a, 7b (rest position).

In the rest position, the pantograph 10 is arranged in a low position without contact with the cables 7a, 7b. The shoes 14a and 14b are sufficiently distant from the cables 7a, 7b to avoid any accidental connection.

The electric vehicle 9 is provided with a power converter 20 that converts the voltage received by the pantograph 10 into a voltage suited for the high voltage line 21. This line 21 is the line that distributes high voltage to the vehicle assembly, including the battery 16, the driving organs 23 and the auxiliary organs 24.

A third protection system R3 permanently monitors the isolation of the conductors of the high voltage line 21 with respect to the metal frame of the vehicle 9. In case of detection of a current leakage between the high voltage line 21 and the frame of the vehicle 9, the third protection system R3 is provided for interrupting the supply of power to the high voltage line 21 by way of the automatic opening of a second contactor 26. The second contactor 26 is preferably arranged between an output of the power control unit 20 and in input of the high voltage line 21, so as to enable the disengagement of the vehicle 9 from the collection area.

According to the invention, there is provided a power line carrier generator PLC 30 that enters a high frequency and reduced energy signal **s(t)** in the electrical connection comprising the power conductors 9a, 9b, the two cables 7a and 7b and the shoes 14a, 14b of the pantograph 10 coupled to the cables 7a and 7b. The signal s(t) can have different frequencies and is adjusted to the total impedance Z(ω) of the electrical connection.

The total impedance Z(ω) is equal to the sum of the impedances Z(ω)_{R1} Z(ω)_{R2} Z(ω)_{R3} of the components R1, R2 and R3 belonging to the electrical connection, when the components R1, R2 and R3 are working.

Terrestrial PLCs are traditionally divided into two categories based on the capacity offered. High capacity PLCs use frequencies in the frequency band ranging from 1.6 to 30 MHz (HF band ranging from 3 to 30 MHz) and low capacity PLCs use frequencies in the frequency band ranging from 9 to 150 kHz in Europe and from 150 to 450 kHz in the United States.

In order to enter the signal s(t), you can use, for example, an electrical current coupler for high frequency signals carrying data and a data modem. In this example, the electrical current coupler comprises a capacitor C and an inductance L coupled to the power conductors 9a, 9b.

The invention also comprises a decoding unit 33 of the signal s(t), which is arranged on the electric vehicle 9 and is adapted to receive the signal s_{R}(t) that is present on the electrical connection at the level of the electric vehicle 9 before the second contactor 26.

The unit 33 controls whether the signal s_{R}(t) received from the vehicle 9 complies with, is proportionate, appropriate for the impedance Z(ω) which is expected in case of proper electrical connection on said electrical connection, namely when the components R1, R2 and R3 are working.

If the impedance of the electrical connection changes due to a change in the impedances Z(ω)ᵣ₁, Z(ω)ᵣ₂ or Z(ω)ᵣ₃ (greater or smaller), the PLC signal is changed and this change in the signal determines the signalling of a fault.

For example, the unit 33 controls whether the power of the signal s_{R}(t) received is sufficient and if it same is greater than a limit value.

An unexpected change in the signal s_{R}(t) with respect to the expected signal (for example an attenuation of the power) corresponds to an incorrect continuity of the electrical connection, namely a loss of isolation on the electrical connection, which represents a potential electrical danger.

The electrical connection can be interrupted/altered for different reasons:
- if the pantograph 10 does not touch the two cables (for example because the vehicle 9 is not arranged correctly with respect to the cables 7a, 7b);
- if the pantograph touches only one cable (for example because the vehicle 9 is not arranged correctly with respect to the cables 7a, 7b);
- if the contacts are not in good conditions (for example in case of oxidation, corrosion, dirt on the shoes 14a, 14b and/or cables 7a, 7b); and
- if at least one protection system R1, R2 and R3 is open.

An unexpected change in the signal s_{R}(t) received can also be caused in case of a vehicle 9 that is poorly isolated from the ground.

As a matter of fact, every small leakage of current towards the ground 8 produces a remarkable degradation of the power/of the waveform of the signal s_{R}(t).

An unexpected change in the signal s_{R}(t) received can correspond to an excessive resistance on the electrical connection.

PLCs operate in differential mode, if the signal is too weak, the signal decoding unit 33 indicates the loss of signal.

If an unexpected change in the signal s_{R}(t) received with respect to the expected signal is detected, said signalling of a fault can comprise the interruption of the transmission of energy, first of all, through opening of a contactor 3 or 20 or, as a last resort, by means of a movement of the pantograph 10.

In the last case, the signal decoding unit 33 interacts with the second protection system R2 so as to order the immediate decoupling between the conductors 14a, 14b of the pantograph 10 and the cables 7a, 7b to interrupt said connection.

The amplitude of the entered signal s(t) can be adjusted in a continuous manner between a minimum value and a maximum value. The amplitude of the signal can be reduced up to the opening of the electrical connection to confirm the operability of the system.

The PLC signal could also be voluntarily detuned to obtain the opening of the electrical connection and confirm the operability of the system.

The unit 33 also decrypts the signal s(t) to extract the information **d[n]** (namely the data **d[n]**) associated with the signal **s(t)** for the control of the charge of the batteries. The detected information **d[n]** can comprise, by way of non-limiting example: the charging voltage of the battery 16, the charging current of the battery 16, the charging time, the identification of the battery/of the vehicle being charged, the identification of the quantity of energy to be transferred (A/h). The data **d[n]** can be used to establish strategies to encourage a faster charging of the batteries 16. The information **d[n]** is used by the power control unit 22 to adjust the voltage, the charging current and the charging time of the battery 16 with known means.

The coupling between the unit 33 and the high voltage line 21 is obtained with an inductive-capacitive circuit comprising two capacitors C1 and C2 and a transformer-breaker T1. The transformer-breaker T1 has a primary winding connected to the capacitors C1 and C2 and a secondary coupling coupled to a data modem.

The signal **s(t)** is entered after the first protection system R1 (so as not to disturb the protection system R1) and the signal s(t) is «read» before the protection system R3 (so as not to disturb the protection system R3.

The invention leads to the following advantages:
A transmission of data between the DC voltage source 2 and the vehicle 10 without the use of the pilot cable;
There is an additional control of the electrical continuity with respect to the protection systems R1, R2 and R3;
The protection systems R1, R2 and R3 are automatically and regularly tested by the use of the PLC; as a matter of fact, in case of loss of isolation at the level of the digital relays R1, R2 or R3, the electrical connection is immediately interrupted.

A high electrical safety through class II protection;

The system permits the simultaneous connection of different vehicles to the same charging station, the energy provided by (2) can supply different lines (7a and 7b) to charge other vehicles. If a second vehicle is simultaneously connected to the voltage source 2 when a first vehicle is already connected to the source, it must have a corresponding charging impedance so as not to attenuate the PLC signal of the first vehicle in order to avoid the opening of the electrical connection between the voltage source 2 and the first vehicle. The connection between a voltage source 2 and different vehicles is possible provided that the threshold of the received signal S(t) is not reached;
- The simplification of the connection points and the possible automation of the collection.

## Claims

1. A charging system for urban bus comprising:
a source (2) of charging voltage and a first contactor (3) which is arranged between an output (2b) of the voltage source (2) and an overhead power supply line (5) comprising two cables (7a and 7b) which receive a power supply by way of the power conductors (9a, 9b);
a first protection system R1 which constantly monitors the isolation of the charging source (2) with respect to the grounding (8); the exceeding of an unbalance threshold causes the automatic opening of the first contactor (3);
- an electric vehicle (9) constituted by a urban bus that is provided with a pantograph (10) adjustable between two positions: a contact position wherein the conductors (14a, 14b) of the pantograph (10) touch the respective cables (7a, 7b) to provide a charging current to the batteries (16) of the vehicle and an open position in which the conductors (14a, 14b) of the pantograph do not touch the cables (7a, 7b);
- a second protection system R2 which monitors permanently the isolation between the cables (7a and 7b) and the frame of the pantograph (10); the second protection system R2 obtains the immediate decoupling between the conductors (14a, 14b) of the pantograph (10) and the cables (7a, 7b) when a current leakage is detected; the electric vehicle is provided with a power converter (20) that converts the voltage received by the pantograph (10) into a DC voltage that is supplied to one or more batteries;
- a third protection system R3 which monitors permanently the isolation of the conductors of the voltage line (21) with respect to the metal frame of the vehicle (9) ; in case of detection of a current leakage between **the voltage line** and the vehicle frame, the third protection system R3 is provided for interrupting the constant power supply to **the voltage line** by way of the automatic opening of a second contactor (26);
**characterized by comprising:**
- a power line carrier generator PLC (30) that enters a high frequency and reduced energy signal **s(t)** in the electrical connection comprising the power conductors (9a, 9b), the two cables (7a and 7b) and the conductors (14a, 14b) of the pantograph (10) coupled to the cables (7a and 7b);
- a unit (33) that controls whether the signal s_{R}(t) received from the vehicle (9) complies with the impedance Z(ω) which is expected in case of proper electrical connection on said electrical connection;
- the unit (33) is also adapted to perform the signaling of a fault when an unexpected change in the signal s_{R}(t) with respect to the expected signal is detected;
said unexpected change of the signal s_{R}(t) represents a connection which is degraded due to a loss of electrical isolation or excessive resistance on the electrical connection;
the unit (33) is adapted to obtain the automatic interruption of the electrical connection upon detection of fault signal when an unexpected change in the signal s_{R}(t) with respect to the expected signal is detected; said unexpected change in the signal s_{R}(t) represents a connection which is degraded due to a loss of electrical isolation or excessive resistance on the electrical connection;
the unit (33) interacts with the first contactor (3) and with the second contactor (26) to open the respective contactor (3, 26) when an unexpected change of the received signal s_{R}(t) with respect to the expected signal is detected;
the unit (33), as a last resort, interacts with the second protection system R2 to control the immediate decoupling between the conductors (14a, 14b) of the pantograph (10) and the cables (7a, 7b) to interrupt said connection when an unexpected change of the received signal s_{R}(t) with respect to the expected signal is detected.

2. The system according to claim 1 wherein, the unit (33) controls whether the power of the signal s_{R}(t) received is sufficient and if the same is greater than a limit value.

3. The system according to one of the preceding claims wherein, a decoding unit (33) of the signal s(t) is provided, arranged on the electric vehicle (9) and adapted to decrypt the signal s(t) to extract the information associated to signal s_{R}(t) for the control of the batteries (16).

4. The system according to one of the preceding claims wherein, the signal **s(t)** is entered between the first contactor (3) and the cables (7a, 7b).

5. The system according to one of the preceding claims wherein, the signal s_{R}(t) is detected before the second contactor (26) .

## Patentansprüche

1. Ein Ladesystem für einen Stadtbus, umfassend:
eine Ladungsspannungsquelle (2) und einen ersten Schütz (3), welcher zwischen einem Ausgang (2b) der Spannungsquelle (2) und einer Oberleitungsstromversorgung (5), welche zwei Kabel (7a und 7b) umfasst, die eine Stromversorgung durch zwei Stromleiter (9a, 9b) erhalten, angeordnet ist;
- ein erstes Schutzsystem R1, das permanent die Isolierung der Spannungsquelle (2) in Bezug auf die Erdung (8) überwacht; das Überschreiten eines Ungleichgewichtsschwellenwerts löst das Öffnen des ersten Schütz (3) aus;
- ein elektrisches Fahrzeug (9), das von einem Stadtbus dargestellt wird, ausgeführt mit einem Stromabnehmer (10), der zwischen zwei Positionen verstellbar ist: einer Kontaktposition, in der die Stromleiter (14a, 14b) des Stromabnehmers (10) die jeweiligen Kabel (7a, 7b) berühren, um einen Ladestrom für die Batterien (16) des Fahrzeugs bereitzustellen, und einer offenen Position, in der die Stromleiter (14a, 14b) des Stromabnehmers die Kabel (7a, 7b) nicht berühren;
- ein zweites Schutzsystem R2, das dauerhaft die Isolierung zwischen den Kabeln (7a und 7b) und dem Rahmen des Stromabnehmers (10) überwacht; welches zweite Schutzsystem R2 die sofortige Entkopplung zwischen den Stromleitern (14a, 14b) des Stromabnehmers (10) und den Kabeln (7a, 7b) bewirkt, wenn ein Leckstrom erkannt wird; das elektrische Fahrzeug ist ausgeführt mit einem Stromrichter (20), der die vom Stromabnehmer (10) empfangene Spannung in eine Gleichspannung umwandelt, die einer oder mehreren Batterien zugeführt wird;
- ein drittes Schutzsystem R3, das dauerhaft die Isolierung der Stromleiter der Spannungsleitung (21) in Bezug auf den Metallrahmen des Fahrzeugs (9) überwacht; im Falle der Erkennung eines Leckstroms zwischen der Spannungsleitung und dem Fahrzeugrahmen, ist das dritte Schutzsystem R3 ausgeführt, um die konstante Stromversorgung der Spannungsleitung durch das automatische Öffnen eines zweiten Schütz (26) zu unterbrechen;
**dadurch gekennzeichnet, dass** es umfasst:
- einen Stromleitungsträgerfrequenz-Generator PLC (30), der eine hohe Frequenz und ein reduziertes Energiesignal s(t) in die elektrische Verbindung, umfassend die Stromleiter (9a, 9b), die zwei Kabel (7a und 7b) und die Stromleiter (14a, 14b) des Stromabnehmers (10), der an die Kabel (7a und 7b) gekoppelt ist, einspeist;
- eine Einheit (33), die steuert, ob das Signal s_{R}(t), empfangen von dem Fahrzeug (9), einer Impedanz z(ω) entspricht, die im Falle einer ordnungsgemäßen elektrischen Verbindung an der elektrischen Verbindung erwartet wird;
- welche Einheit (33) weiter ausgeführt ist, um die Signalisierung eines Fehlers auszuführen, wenn eine unerwartete Änderung des Signals s_{R}(t) in Bezug auf das erwartete Signal erkannt wird;
- wobei die unerwartete Änderung des Signals s_{R}(t) eine Verbindung darstellt, die durch Verlust von elektrischer Isolierung oder exzessiven Widerstand an der elektrischen Verbindung verschlechtert ist;
- wobei die Einheit (33) ausgeführt ist, um die automatische Unterbrechung der elektrischen Verbindung bei Erkennung eines Fehlersignals zu erwirken, wenn eine unerwartete Änderung des Signals s_{R}(t) in Bezug auf das erwartete Signal erkannt wird; wobei die unerwartete Änderung des Signals s_{R}(t) eine Verbindung darstellt, die durch Verlust von elektrischer Isolierung oder übermäßigen Widerstand an der elektrischen Verbindung degradiert ist;
- wobei die Einheit (33) interagiert mit dem ersten Schütz (3) und mit dem zweiten Schütz (26), um den jeweiligen Schütz (3, 26) zu öffnen, wenn eine unerwartete Änderung des empfangenen Signals s_{R}(t) in Bezug auf das erwartete Signal erkannt wird;
- und die Einheit (33), als letztes Mittel, interagiert mit dem zweiten Schutzsystem R2, um das sofortige Entkoppeln zwischen den Leitern (14a, 14b) des Stromabnehmers (10) und den Kabeln (7a, 7b) zu steuern, um die Verbindung zu unterbrechen, wenn eine unerwartete Änderung des empfangenen Signals s_{R}(t) in Bezug auf das erwartete Signal erkannt wird.

2. System nach Anspruch 1, wobei die Einheit (33) steuert, ob die Stärke des empfangenen Signals s_{R}(t) ausreicht und ob dieses größer als ein Grenzwert ist.

3. System nach einem der vorstehenden Ansprüche, wobei eine Dekodierungseinheit (33) des Signals s(t) vorgesehen ist, angeordnet an dem elektrischen Fahrzeug (9) und ausgeführt, um das Signal s(t) zu entschlüsseln, um die Informationen zu extrahieren, die mit dem Signal s_{R}(t) für die Steuerung der Batterien (16) assoziiert sind.

4. System nach einem der vorstehenden Ansprüche, wobei das Signal s(t) zwischen dem ersten Schütz (3) und den Kabeln (7a, 7b) eingespeist wird.

5. System nach einem der vorstehenden Ansprüche, wobei das Signal s_{R}(t) vor dem zweiten Schütz (26) erkannt wird.

## Revendications

1. Système de charge pour un bus urbain comprenant :
- une source (2) de tension de charge et un premier contacteur (3) qui est agencé entre une sortie (2b) de la source de tension (2) et une ligne d'alimentation aérienne (5) comprenant deux câbles (7a et 7b) qui reçoivent une alimentation au moyen des conducteurs de puissance (9a, 9b) ;
- un premier système de protection R1 qui surveille en permanence l'isolement de la source de charge (2) par rapport à la masse (8) ; le dépassement d'un seuil de déséquilibre entraîne l'ouverture automatique du premier contacteur (3) ;
- un véhicule électrique (9) constitué par un bus urbain qui est pourvu d'un pantographe (10) qui peut être ajusté entre deux positions : une position de contact dans laquelle les conducteurs (14a, 14b) du pantographe (10) sont en contact avec les câbles (7a, 7b) respectifs pour fournir un courant de charge aux batteries (16) du véhicule et une position ouverte dans laquelle les conducteurs (14a, 14b) du pantographe ne sont pas en contact avec les câbles (7a, 7b) ;
- un deuxième système de protection R2 qui surveille en permanence l'isolement entre les câbles (7a et 7b) et le cadre du pantographe (10) ; le deuxième système de protection R2 effectue le découplage immédiat entre les conducteurs (14a, 14b) du pantographe (10) et les câbles (7a, 7b) lorsqu'une fuite de courant est détectée ; le véhicule électrique est pourvu d'un convertisseur de puissance (20) qui convertit la tension reçue par le pantographe (10) en une tension continue qui est fournie à une ou plusieurs batteries ;
- un troisième système de protection R3 qui surveille en permanence l'isolement des conducteurs de la ligne de tension (21) par rapport au châssis métallique du véhicule (9) ; dans le cas d'une détection d'une fuite de courant entre la ligne de tension et le châssis de véhicule, le troisième système de protection R3 est prévu pour interrompre la fourniture de puissance constante à la ligne de tension au moyen de l'ouverture automatique d'un deuxième contacteur (26) ;
**caractérisé en ce qu'**il comprend :
- un générateur de courants porteurs en ligne PLC (30) qui applique un signal haute fréquence et d'énergie réduite s(t) à la connexion électrique comprenant les conducteurs de puissance (9a, 9b), les deux câbles (7a et 7b) et les conducteurs (14a, 14b) du pantographe (10) couplés aux câbles (7a et 7b) ;
- une unité (33) qui contrôle si le signal s_{R}(t) reçu du véhicule (9) satisfait à l'impédance Z(ω) qui est attendue dans le cas d'une connexion électrique correcte sur ladite connexion électrique ;
- l'unité (33) est également conçue pour effectuer la signalisation d'un défaut lorsqu'un changement inattendu du signal s_{R}(t) par rapport au signal attendu est détecté ;
ledit changement inattendu du signal s_{R}(t) représente une connexion qui est dégradée du fait d'une perte d'isolement électrique ou d'une résistance excessive sur la connexion électrique ;
l'unité (33) est conçue pour obtenir l'interruption automatique de la connexion électrique lors de la détection d'un signal de défaut lorsqu'un changement inattendu du signal s_{R}(t) par rapport au signal attendu est détecté ; ledit changement inattendu du signal s_{R}(t) représente une connexion qui est dégradée du fait d'une perte d'isolement électrique ou d'une résistance excessive sur la connexion électrique ;
l'unité (33) interagit avec le premier contacteur (3) et avec le deuxième contacteur (26) pour ouvrir le contacteur (3, 26) respectif lorsqu'un changement inattendu du signal s_{R}(t) reçu par rapport au signal attendu est détecté ;
l'unité (33), en dernier ressort, interagit avec le deuxième système de protection R2 pour commander le découplage immédiat entre les conducteurs (14a, 14b) du pantographe (10) et les câbles (7a, 7b) pour interrompre ladite connexion lorsqu'un changement inattendu du signal s_{R}(t) reçu par rapport au signal attendu est détecté.

2. Système selon la revendication 1, dans lequel l'unité (33) contrôle si la puissance du signal s_{R}(t) reçu est suffisante et si ladite puissance est supérieure à une valeur limite.

3. Système selon l'une des revendications précédentes, dans lequel une unité de décodage (33) du signal s(t) est prévue, agencée sur le véhicule électrique (9) et conçue pour déchiffrer le signal s(t) pour extraire les informations associées au signal s_{R}(t) pour le contrôle des batteries (16).

4. Système selon l'une des revendications précédentes,
dans lequel le signal s(t) est appliqué entre le premier contacteur (3) et les câbles (7a, 7b).

5. Système selon l'une des revendications précédentes, dans lequel le signal s_{R}(t) est détecté avant le deuxième contacteur (26).
